# EUROPÄISCHE PATENTSCHRIFT

(11) **EP 0 841 147 B1**
(45) Veröffentlichungstag und Bekanntmachung des Hinweises auf die Patenterteilung: **22.05.2002**
(21) Anmeldenummer: 97119313.1
(22) Anmeldetag: 05.11.1997
(51) Int. Cl.: B29C 63/42, B29C 65/48, B29C 63/48

(54) **Verfahren zum Umhüllen einer Walze mit einer antiadhäsiven Schicht**
Method for lining a roller with an anti-adhesive layer
Procédé pour recouvrir un rouleau avec un revêtement anti-adhérent

(30) Priorität: 06.11.1996 DE 19645696
(43) Veröffentlichungstag der Anmeldung: 13.05.1998
(73) Patentinhaber: Ahauser Gummiwalzen Lammers GmbH & Co. KG, 48683 Ahaus (DE)
(72) Erfinder: Buesge, Heinz, 48619 Heek (DE)
(74) Vertreter: Hoffmeister, Helmut, Dr. Dipl.-Phys.

(56) Entgegenhaltungen:
- CA-A- 1 147 133
- GB-A- 1 136 866
- US-A- 3 426 119
- US-A- 3 435 500
- US-A- 3 749 621
- US-A- 4 198 739

## Beschreibung

Die Erfindung betrifft Verfahren zum Umhüllen eines mit einem Mantel aus einem Elastomer versehenen starren Walzenkerns mit einer antiadhäsiven Schicht aus einem Fluorpolymer.

Es besteht ein Bedürfnis, Walzen, wie sie insbesondere zur Beschichtung von bahnförmigen Substraten, wie Papier oder Kunststoffolien, mit flüssigen Kunststoffen verwendet werden, die sowohl einen elastomeren Mantel als auch eine antiadhäsive Schicht besitzen, mit Fluorpolymeren zu beschichten.

Hierfür eignen sich insbesondere PTFE (Polytetrafluorethylen), FEP (fluoriertes Ethylen-Propylen-Copolymer) und PFA-TFA (modifiziertes Tetrafluorethylen mit 5% vollfluoriertem Copolymeren). Insbesondere FEP und PFA-TFA haben einen sehr niedrigen Reibungskoeffizienten und sind kaum benetzbar, d.h. antiadhäsiv.

In der DE-PS 22 47 821 wird ein Verfahren zum Auftragen von PTFE auf eine starre Metallwalze beschrieben. Hierbei wird eine flüssige PTFE-Dispersion schichtweise mit Hilfe einer Sprühpistole aufgetragen, wobei die Walze nach jedem einzelnen Beschichtungsschnitt auf eine Temperatur von etwa 82°C erwärmt wird, damit die flüchtigen Substanzen der Dispersion abdampfen können. Nach dem Erreichen einer gewünschten Gesamtdicke des Überzuges wird die Walze in einem Schmelzofen auf eine Temperatur von ca. 400°C erhitzt, um die PTFE-Überzüge vollständig integriert zu schmelzen und zu sintern.

Dieses bekannte Auftragungsverfahren ist nicht geeignet, eine Fluorpolymer-Schicht auf einen relativ wärmeempfindlichen Mantel aus einem Elastomer aufzutragen. Man erhält demnach nur eine Beschichtung einer metallischen Oberfläche, beispielsweise für die Schmelzfixierwalzen von Kopiergeräten.

Ferner ist der GB 22 65 853 A ein Verfahren zur Umhüllung von Eisenrohren mit einem thermoplastischen Mantel als Korrosionsschutzmaßnahme zu entnehmen, bei dem das "eingebaute Gedächtnis" des thermoplastischen Materials das Aufschieben des gestreckten Mantels auf das Rohr und das Schrumpfen ermöglicht, bei gleichzeitiger Beaufschlagung des Mantels mit hohem Luftdruck. Infolge der Schrumpfung legt sich der Mantel unmittelbar auf das Rohr an. Für das Beschichten von einem starren Walzenkern, der mit einem Elastomer beschichtet ist, ist das Verfahren nicht beschrieben.

Weiterhin ist aus der DE-OS 36 08 480 ein Verfahren zur Ummantelung eines starren Walzenkerns, gegebenenfalls einer Aluminium-Walze mit einer PTFE-Schicht bekannt. Die PTFE-Schicht wird aus einem Gewebezuschnitt hergestellt. Dieser wird mit Aceton angefeuchtet und auf Stoß um die mit einem Haftvermittler beschichtete Walze angeordnet. Nach dem Austrocknen wird die PTFE-Schicht mit Hilfe einer aufgeschobenen Aushärtehülse fixiert und bei einer Temperatur von 250°C eingebrannt. Auch dieses Verfahren ist auf bestimmte Anwendungsfälle, insbesondere das Beschichten von metallischen Walzenkernen, beschränkt. Starke Lösungsmittel, wie Aceton, greifen einen Elastomer-Mantel stark an. Aceton hat außerdem den Nachteil, daß es die Umgebungsluft stark beeinträchtigt und daher jeweils hohe Aufwendungen für Belüftung oder entsprechende abgeschlossene Räume erfordert. Nachteilig ist ferner, daß sich Nähte bei der Fixierung der PTFE-Schicht nicht vermeiden lassen.

Es stellt sich demnach die Aufgabe, ein Verfahren anzugeben, bei dem bereits mit einem Mantel aus einem Elastomer versehene starre Walzenkerne mit einer antiadhäsiven Schicht aus einem Fluorpolymer versehen werden können.

Nach vielen Versuchen hat sich hierfür ein Verfahren mit folgenden Verfahrensschritten als durchführbar erwiesen:
a) Beschleifen des Elastomer-Mantels an seiner Außenseite mit dem Ziel der Aufrauhung und Durchmesser-Vergleichmäßigung;
b) Aufbringen eines Klebstoffes auf die Außenseite des Elastomer-Mantels;
c) Aufschieben eines durch expandierendes Strecken zylindrisch aufgeweiteten Schlauchabschnittes aus einem Fluorpolymer, insbesondere FEP oder PFA, auf den mit Klebstoff versehenen Elastomer-Mantel;
d) Erwärmen des Schlauchabschnittes bis zum Eintritt des "Memory"-Effektes, bei dem sich der Schlauchabschnitt zusammenzieht und sich an die Außenseite des Elastomer-Mantels anlegt;
e) schiebendes Pressen des noch elastischen, erwärmten Schlauchabschnittes, wobei die Klebstoff-Viskosität soweit erhöht ist, daß ein Abstreifen des Klebstoffes unterhalb des Schlauchabschnittes vermieden wird, jedoch vorhandene Lufteinschlüsse zwischen Elastomer-Mantel und Schlauch seitlich herausgepreßt werden und gleichzeitig ein vollflächiges, gleichmäßiges Anliegen des Schlauchabschnittes auf dem Elastomer-Mantel unter Ausbügeln von Unebenheiten erreicht wird;
f) Abkühlenlassen des Schlauches und der übrigen Walzenteile.

Wesentlich ist, daß die bei dem Verfahren hergestellten beschichteten Walzen eine für die vorgenannten Materialien äußerst genaue zylindrische, bombierte oder kegelige Peripherie aufweisen, die sie für die genannten Einsatzzwecke besonders geeignet machen.

Die Elastomere, die für den elastomeren Mantel ausgewählt werden, bestehen aus üblichen, in der Gummiwalzen-Technologie bekannten Materialien. Sie können zum Beispiel aus Chloropren-Kautschuk, aus chlorsulfoniertem Polyethylen, aus Epichlorhydrin-Kautschuk, aus Ehtylen-Propylen-Dien-Kautschuk, aus Acrylnitril-Butadien-Kautschuk, aus Natur-Kautschuk, aus Styrol-Butadien-Kautschuk und ähnlichen, an sich bekannten elastomeren Materialien bestehen.

Entsprechend den Materialien werden übliche, bekannte chemisch abbindende Klebstoffe, beispielsweise Epoxyharz-Klebstoffe, verwendet, wobei nicht ausgeschlossen wird, daß zusätzlich bekannte Haftvermittler und/oder Primer verwendet werden. Wesentlich ist, daß der Klebstoff eine bekannte Abbindezeit hat, sodaß er zunächst relativ dünnflüssig ist und leicht aufgetragen werden kann. Ist der Schlauchabschnitt dann aufgeschoben, sollte sich die Viskosität (Dickflüssigkeit) des Klebstoffes so weit erhöht haben, daß beim schiebenden Pressen ein Verschieben und Abstreifen des Klebstoffes unterhalb des Schlauchabschnittes nicht eintritt bzw. vermieden wird.

Wesentlich ist weiterhin, daß trotz der gegebenen Viskosität nach dem Zusammenziehen, aber noch bei elastischem, erwärmtem Schlauch, eventuell vorhandene Lufteinschlüsse zwischen Elastomer-Mantel und Schlauch seitlich zuverlässig herauspreßbar sind. Dies geschieht durch übliche Abstreifer.

Um die Oberflächen, insbesondere deren Zylindrizität, zu verbessern, ist es auch noch möglich, die Außenseite des auf dem Elastomer-Mantel liegenden Schlauches an seiner Außenseite zu schleifen und zu polieren.

Überraschenderweise lassen sich hierbei für derartige elastische Walzen ungewöhnliche Zylindrizitäten mit Abweichungen von kleiner 0,02 mm erzeugen.

Das Dehnen des Elastomer-Schlauches erfolgt durch mechanische oder hydraulisch sich ausdehnende Preß-Stulpen, wie sie an sich im Stand der Technik bekannt sind.

Ein Ausführungsbeispiel der Erfindung wird anhand folgender Beispiele beschrieben:

### Beispiel 1:

Eine Walze mit einem Walzenkern (Durchmesser 300 mm) aus Stahl wird zunächst in einem an sich bekannten Verfahren mit einem 5 mm dicken Mantel aus Styrol-Butadien-Kautschuk beschichtet. Der Elastomer-Mantel wird durch Beschleifen leicht aufgerauht und im Durchmesser vergleichmäßigt. Die Außenseite des Elastomer-Mantels wird dann mit einem flüssigen 2-Komponenten-Polymerisationsklebstoff in einer etwa 0,1 mm dicken Schicht gleichmäßig eingestrichen. Gleichzeitig wird ein 0,5 bis 1,5 mm dicker Schlauch aus PFE (Handelsname Teflon FEP) mit einem Innendurchmesser von 300mm mechanisch aufgeweitet, bis der Durchmesser des ursprünglichen Schlauches sich um etwa 15% vergrößert hat.

Dabei ist zu genutzt, daß PFE einen sogenannten "Memory"-Effekt aufweist. Nachdem das Material mechanisch gedehnt und gestreckt ist, kann es auf die mit dem Elastomer-Mantel beschichtete Walze aufgezogen werden. Sodann erfolgt ein Erwärmen bis zum Eintritt des "Memory"-Effektes, bei dessen Eintritt sich der PFE-Schlauch zusammenzieht und sich an die Außenseite des Elastomer-Mantels fest anlegt.

Gleichzeitig überbrückt der Klebstoff die Kontaktbereiche zwischen dem PFE-Schlauch und dem Elastomer-Mantel. Mit einem Hülsenabstreifer wird dann von der Mitte der Walze nach außen ein schiebendes Pressen ausgeübt, welches den Klebstoff vergleichmäßigt und in die Rauhigkeitsbereiche des Elastomer-Mantels eindrückt und vorhandene Lufteinschlüsse zwischen dem Elastomer-Mantel und der Innenseite des PFE-Schlauches zur Seite hin nach außen herausgequetscht, wobei das Entfernen der Luft im erwärmten Zustand des PTFE zu 100% möglich ist.

Anschließend kühlt die mit dem PFE-Schlauch versehene Walze bis auf Zimmertemperatur aus. Sodann kann die Zylindrizität noch einmal überprüft werden und eventuelle Unebenheiten durch Abschleifen beseitigt werden.

### Beispiel 2:

Anstelle des PFE-Schlauchabschnittes wird in diesem Fall ein Schlauchabschnitt aus einem Perfluoralkoxy-Copolymer (PFAS/TFA; Handelsname Teflon FEP; Du Pont) mit einer Dicke zwischen 0,5 bis 1,5 mm verwendet. Die Schritte sind im übrigen gleich. Die Dicke des Mantels des Fluorpolymers richtet sich nach dem Einsatzzweck. Je nach dem Durchmesser der mit einer antiadhäsiven Schicht zu versehenden Walze wird die Dicke des PTFE größer oder kleiner gewählt. Auch lassen sich bei dickeren PTFE-Folien längere Standzeiten erzielen, da die Außenseite mehrfach nach Verschleiß wieder abgeschliffen und regeneriert werden kann. Im wesentlich sind hier dem Fachmann Spielräume seines Ermessens gegeben.

## Patentansprüche

1. Verfahren zum Umhüllen eines mit einem Mantel aus einem Elastomer versehenen starren Walzenkerns mit einer antiadhäsiven Schicht aus einem Fluorpolymer, mit folgenden Verfahrensschritten:
a) Beschleifen des Elastomer-Mantels an seiner Außenseite mit dem Ziel der Aufrauhung und Durchmesser-Vergleichmäßigung;
b) Aufbringen eines Klebstoffes auf die Außenseite des Elastomer-Mantels;
c) Aufschieben eines durch expandierendes Strecken zylindrisch aufgeweiteten Schlauchabschnittes aus einem Fluorpolymer, insbesondere FEP oder PFA, auf den mit Klebstoff versehenen Elastomer-Mantel;
d) Erwärmen des Schlauchabschnittes bis zum Eintritt des "Memory"-Effektes, bei dem sich der Schlauchabschnitt zusammenzieht und sich an die Außenseite des Elastomer-Mantels anlegt;
e) schiebendes Pressen des noch elastischen, erwärmten Schlauchabschnittes, wobei die Klebstoff-Viskosität soweit erhöht ist, daß ein Abstreifen des Klebstoffes unterhalb des Schlauchabschnittes vermieden wird, jedoch vorhandene Lufteinschlüsse zwischen Elastomer-Mantel und Schlauch seitlich herausgepreßt werden und gleichzeitig ein vollflächiges, gleichmäßiges Anliegen des Schlauchabschnittes auf dem Elastomer-Mantel unter Ausbügeln von Unebenheiten erreicht wird;
f) Abkühlenlassen des Schlauches und der übrigen Walzenteile.

2. Verfahren nach Anspruch 1, **dadurch gekennzeichnet, daß** die Außenseite des auf dem Elastomer-Mantel liegenden Schlauchabschnittes an seiner Außenseite geschliffen und poliert wird.

3. Verfahren nach Anspruch 1, **dadurch gekennzeichnet, daß** als Klebstoff ein chemisch abbindender Klebstoff verwendet wird.

## Claims

1. A process whereby a rigid roller barrel having an elastomeric jacket is coated with an anti-adhesive layer of a fluoropolymer, in the following steps:
a) grinding the outside of the elastomer jacket so as to roughen it and obtain a uniform diameter;
b) applying an adhesive to the outside of the elastomer jacket;
c) sliding a portion of a fluoropolymer tube, particularly FEP or PFA, cylindrically expanded by stretching, on to the adhesive-coated elastomer jacket;
d) heating the tube portion until the "memory" effect occurs, wherein the tube portion contracts and presses against the outside of the elastomer jacket;
e) sliding and pressing the still elastic, heated tube portion, the viscosity of the adhesive being increased sufficiently to prevent the adhesive being scraped off under the tube portion but so that any air inclusions between the elastomer jacket and tube are pressed out at the sides and at the same time the tube portion bears uniformly over its entire surface on the elastomer jacket and evens out irregularities, and
f) leaving the tube and the other parts of the roller to cool.

2. A method according to claim 1, **characterised in that** the outside of the tube portion on the elastomer jacket is ground and polished on the outside thereof.

3. A method according to claim 1, **characterised in that** the adhesive is a chemically bonding adhesive.

## Revendications

1. Procédé pour recouvrir un noyau de cylindre rigide pourvu d'une enveloppe en élastomère et comportant une couche anti-adhésive en un polymère fluoré, comportant les étapes de procédé suivantes :
a) meuler l'enveloppe en élastomère sur sa face extérieure dans le but d'obtenir une rugosité et d'égaliser le diamètre ;
b) déposer une substance adhésive sur la face extérieure de l'enveloppe en élastomère ;
c) faire coulisser une section de tuyau en polymère fluoré, par exemple en coplymére d'éthylène propylène fluoré ou en alcoxyle perfluorique, qui est élargie de manière cylindrique par étirage avec expansion, sur l'enveloppe en élastomère pourvue de la substance adhésive ;
d) chauffer la section de tuyau jusqu'à l'apparition de l'effet "mémoire" pour lequel la section de tuyau se contracte et se dépose sur la face extérieure de l'enveloppe en élastomère ;
e) presser en la poussant la section de tuyau encore élastique et chauffée, la viscosité de la substance adhésive étant augmentée jusqu'à ce que l'on évite un détachement de la substance adhésive au dessous de la section de tuyau, mais que l'on évacue sur le côté, sous l'effet de la pression, les inclusions d'air se trouvant entre l'enveloppe en élastomère et le tuyau et que l'on obtienne, en même temps, un dépôt régulier sur toute la surface de la section de tuyau sur l'enveloppe en élastomère en aplatissant les inégalités de surface ;
f) faire refroidir le tuyau et les autres parties du cylindre.

2. Procédé selon la revendication 1, **caractérisé en ce que** la face extérieure de la section de tuyau reposant sur l'enveloppe en élastomère est meulée et polie sur sa face extérieure.

3. Procédé selon la revendication 1, **caractérisé en ce que** l'on utilise, en tant que substance adhésive, une substance adhésive à prise chimique.
